# EUROPÄISCHE PATENTSCHRIFT

(11) **EP 2 607 151 B1**
(45) Veröffentlichungstag und Bekanntmachung des Hinweises auf die Patenterteilung: **17.06.2015**
(21) Anmeldenummer: 12197928.0
(22) Anmeldetag: 19.12.2012
(51) Int. Cl.: B60N 2/22, B60N 2/26, B60N 2/44, B60N 2/48, B60R 22/10, B60N 2/28, B60N 2/00, B60N 2/235

(54) **Fahrzeugsitzvorrichtung**
Vehicle seat apparatus
Dispositif de siège de véhicule

(30) Priorität: 21.12.2011 DE 102011121858; 30.08.2012 DE 102012108054
(43) Veröffentlichungstag der Anmeldung: 26.06.2013
(73) Patentinhaber: RECARO Child Safety GmbH & Co. KG, 95352 Marktleugast (DE)
(72) Erfinder: Kopp, Evelyn, 96450 Coburg (DE)
(74) Vertreter: Daub, Thomas

(56) Entgegenhaltungen:
- EP-A1- 1 122 120
- DE-A1-102004 018 938
- DE-T2- 60 034 906
- DE-U1-202009 008 200
- DE-U1-202010 010 897
- US-A- 2 952 856
- US-A- 5 383 711
- US-A1- 2005 110 315
- US-B2- 7 434 876

## Beschreibung

Die Erfindung betrifft eine Fahrzeugsitzvorrichtung, insbesondere eine Kindersitzvorrichtung, mit zumindest einer Kopfstützeinheit und/oder zumindest einer Sitzbezugseinheit sowie mit zumindest einer Schulterpolstereinheit nach dem z.B. aus der DE 600 34 906 T2 bekannten Oberbegriff des Anspruchs 1.

Für den Transport von Kindern in Kraftfahrzeugen ist es in Deutschland gesetzlich vorgeschrieben, bei Kindern unter 12 Jahren, deren Körpergröße kleiner als 1,50 m ist, einen Kindersitz während des Transports zu verwenden. Der Kindersitz ist dazu vorgesehen, eine Sicherheit des Kinds bei einem Crash zu erhöhen, indem zum einen die Kinder aufgrund des Kindersitzes eine erhöhte Sitzposition einnehmen, in der sie durch einen Sicherheitsgurt gesichert werden können, und zum anderen aufgrund einer Schale des Kindersitzes ein zusätzlicher Aufprallschutz geboten wird. Es ist ferner bekannt, zusätzlich eine Schulterpolstereinheit zu verwenden, welche Schultern des Kinds abstützt und eine Auflagefläche für den Sicherheitsgurt bildet, so dass dieser nicht in eine Haut des Kinds einschneidet, siehe dazu z.B. die DE 20 2010 010 897 U1.

Ferner ist aus der e.g. DE 20 2010 010 897 U1 oder auch aus der DE 20 2009 008 200 U1 bekannt, die Schulterpolstereinheit lösbar mit der Kopfstützeinheit und/oder der Sitzbezugseinheit zu verbinden. Unter "lösbar verbunden" soll insbesondere verstanden werden, dass die Schulterpolstereinheit dazu vorgesehen ist, von der Kopfstützeinheit und/oder der Sitzbezugseinheit im Wesentlichen beschädigungsfrei abgelöst zu werden. Vorzugsweise ist die Schulterpolstereinheit dazu vorgesehen, nach einer Ablösung erneut mit einer Kopfstützeinheit und/oder einer Sitzbezugseinheit verbunden zu werden. Unter "zumindest im Wesentlichen beschädigungsfrei abgelöst" soll insbesondere verstanden werden, dass nach einer Ablösung eine Funktionsfähigkeit der Schulterpolstereinheit erhalten bleibt. Die Schulterpolstereinheit weist vorzugsweise zumindest eine lösbare Befestigungseinheit auf, wie beispielsweise einen Klettverschluss, einen Reißverschluss oder einen Druckknopf. Es kann insbesondere eine hohe Flexibilität beim Einsatz der Schulterpolstereinheit erreicht werden.

Die Erfindung, die durch die technischen Merkmale des unabhängigen Vorrichtungsanspruch 1 definiert ist, geht aus von einer Fahrzeugsitzvorrichtung, insbesondere einer Kindersitzvorrichtung, mit zumindest einer Kopfstützeinheit und/oder zumindest einer Sitzbezugseinheit sowie mit zumindest einer Schulterpolstereinheit. Unter einer "Fahrzeugsitzvorrichtung" soll insbesondere eine Vorrichtung verstanden werden, die dazu vorgesehen ist, zusätzlich zu und in Zusammenwirkung mit einem Fahrzeugsitz und/oder einem Kindersitz verwendet zu werden. Insbesondere ist die Fahrzeugsitzvorrichtung verschieden von einem integralen Bauteil des Fahrzeugsitzes und/oder des Kindersitzes wie einer Rückenlehne des Fahrzeugsitzes und/oder des Kindersitzes und vorzugsweise ist der Fahrzeugsitz und/oder der Kindersitz auch nach einer eventuellen Entnahme der Fahrzeugsitzvorrichtung funktionsfähig. Unter einer "Kopfstützeinheit" soll insbesondere eine Einheit verstanden werden, die dazu vorgesehen ist, insbesondere eine Abstützung eines Kopfes seitlich in zumindest zwei einander entgegengesetzte Richtungen zu gewährleisten, und die hierzu insbesondere zumindest zwei seitliche Seitenpolster aufweist. Vorzugsweise dient die Kopfstützeinheit zusätzlich zu einer Abstützung eines Kopfes an dessen Hinterseite und weist hierfür vorzugsweise ein Rückenpolster auf. Dabei können die Seitenpolster und das Rückenpolster von getrennten Teilen gebildet sein, erfindungsgemäß sind diese jedoch einstückig ausgebildet und bilden eine U-Form. Unter "einstückig" könnte insbesondere zumindest stoffschlüssig verbunden verstanden werden, beispielsweise durch einen Klebeprozess und/oder einen anderen, einem Fachmann als sinnvoll erscheinenden Prozess oder aber in einem Stück geformt verstanden werden, wie erfindungsgemäß durch eine Herstellung aus einem gemeinsamen Materialstück. Vorzugsweise weisen aus einem Stück hergestellte Einheiten einen gemeinsamen Überzug auf. Unter "vorgesehen" soll insbesondere speziell gestaltet, ausgelegt und/oder ausgestattet verstanden werden. Unter einer "Sitzbezugseinheit" soll insbesondere eine Einheit verstanden werden, die dazu vorgesehen ist, auf eine weitere Einheit gespannt zu werden und diese zumindest teilweise zu bedecken. Vorzugsweise bildet die Sitzbezugseinheit eine abschließende Oberfläche. Vorzugsweise ist die Sitzbezugseinheit zumindest teilweise aus einem Stoff gefertigt. Unter einer "Schulterpolstereinheit" soll insbesondere eine Einheit verstanden werden, die dazu vorgesehen ist, in einem Schulterbereich eine Abstützung zu ermöglichen, und zwar erfindungsgemäß eine Abstützung gegenüber einem Sicherheitsgurt eines Fahrzeugs, so dass dieser nicht auf Haut und/oder Kleidung aufliegt und ins Fleisch einschneidet. Die Schulterpolstereinheit weist hierfür einen Aufnahmebereich für den Sicherheitsgurt auf. Die Schulterpolstereinheit umfasst zumindest zwei Schulterpolsterelemente, die zu der Abstützung vorgesehen sind und von denen jeweils zumindest ein Schulterpolsterelement an jeder Schulter angeordnet ist. Unter einem "Schulterpolsterelement" soll insbesondere ein zumindest im Wesentlichen längliches Element verstanden werden, das dazu vorgesehen ist, die Abstützung an den Schultern zu ermöglichen und einen Hals gegen den Sicherheitsgurt abzuschirmen. Unter "zumindest im Wesentlichen länglich" soll insbesondere ein Element verstanden werden, bei dem eine maximale Ausdehnung in einer Längsrichtung zumindest doppelt so groß, vorteilhaft zumindest fünfmal so groß und vorzugsweise zumindest zehnmal so groß ist wie eine maximale Ausdehnung in Richtungen senkrecht zu der Längsrichtung.

Es wird vorgeschlagen, dass die Schulterpolstereinheit unmittelbar mit der Kopfstützeinheit und/oder der Sitzbezugseinheit verbunden ist. Unter "unmittelbar verbunden" könnte insbesondere verstanden werden, dass die Schulterpolstereinheit mittels einer Befestigungseinheit direkt an der Kopfstützeinheit und/oder der Sitzbezugseinheit befestigt ist, wobei bei einer direkten Befestigung der Schulterpolstereinheit und der Kopfstützeinheit und/oder der Sitzbezugseinheit aneinander die Schulterpolstereinheit und die Kopfstützeinheit und/oder die Sitzbezugseinheit an einem gemeinsamen Verbindungselement, das ein Bauteil der Schulterpolstereinheit oder der Kopfstützeinheit oder der Sitzbezugseinheit ist, beispielsweise ein die zwei Schulterpolsterelemente untereinander verbindendes Bauteil der Schulterpolstereinheit, befestigt sein können, oder aber erfindungsgemäß einstückig mit der Kopfstützeinheit und/oder der Sitzbezugseinheit ausgeführt ist. Insbesondere ist eine unmittelbare Verbindung von Schulterpolstereinheit und Kopfstützeinheit und/oder Sitzbezugseinheit verschieden von einer Verbindung der Schulterpolstereinheit und der Kopfstützeinheit und/oder der Sitzbezugseinheit an unterschiedlichen Trägerelementen eines Trägergestells und/oder unterschiedlichen Elementen eines Kindersitzes. Insbesondere ist die Schulterpolstereinheit an einer von einem Sicherheitsgurt abweichenden Einheit mit der Kopfstützeinheit und/oder der Sitzbezugseinheit befestigt. Es können insbesondere eine stabile Befestigung der Schulterpolstereinheit und ein hoher Sitzkomfort erreicht werden.

Ferner wird erfindungsgemäß vorgeschlagen, dass die Schulterpolstereinheit einstückig mit der Kopfstützeinheit und/oder der Sitzbezugseinheit ausgeführt ist. Die Schulterpolstereinheit und die Kopfstützeinheit und/oder die Sitzbezugseinheit sind aus einem gemeinsamen Gewebestück und/oder Schaumstoffstück, beispielsweise einem gemeinsamen Stück Memory-Schaum, hergestellt. Es kann insbesondere eine stabile Befestigung der Schulterpolstereinheit erreicht werden.

Erfindungsgemäß wird vorgeschlagen, dass die Schulterpolstereinheit einen, in zumindest einer quer zu einer Längserstreckung der Schulterpolstereinheit verlaufenden Ebene geschlossenen Aufnahmebereich für einen Sicherheitsgurt aufweist. Unter einem "Aufnahmebereich" ist ein zu einer Aufnahme des Sicherheitsgurts vorgesehener Bereich zu verstehen, der den Sicherheitsgurt entlang einer Längserstreckung von zumindest einem Zentimeter, vorteilhaft zumindest fünf Zentimetern und vorzugsweise zumindest zehn Zentimetern aufnimmt, den Sicherheitsgurt entlang einer Haupterstreckungsrichtung des Bereichs führt und den Sicherheitsgurt um mehr als zumindest einhundertachtzig Grad, vorzugsweise um dreihundertsechzig Grad, umschließt. Insbesondere ist der Aufnahmebereich verschieden von einer Durchführungsöffnung für einen Sicherheitsgurt in einem Bauteil, durch die der Sicherheitsgurt durchgezogen werden kann, um ihn einer Person anzulegen. Der Aufnahmebereich ist beispielsweise als Lasche ausgeführt. Unter einem "in zumindest einer quer zu einer Längserstreckung der Schulterpolstereinheit verlaufenden Ebene geschlossenen Aufnahmebereich" soll insbesondere ein Aufnahmebereich verstanden werden, der in der zumindest einen Ebene über 360 Grad von einem Material der Schulterpolstereinheit umschlossen ist. Erfindungsgemäß ist die Schulterpolstereinheit dazu vorgesehen, über den Aufnahmebereich eine in dem Fahrzeugsitz sitzende Person vollständig gegenüber dem Sicherheitsgurt abzuschirmen, so dass der Sicherheitsgurt frei von einer Berührung durch eine Haut der in dem Fahrzeugsitz sitzenden Person ist. Es kann insbesondere eine sichere Führung des Sicherheitsgurts auf der Schulterpolstereinheit mit einem hohen Sitzkomfort erreicht werden.

Ferner wird gemäß einer Weiterbildung der Erfindung vorgeschlagen, dass die Kopfstützeinheit dazu vorgesehen ist, lösbar in einen Fahrzeugsitz integriert zu werden. Unter "lösbar integriert" soll insbesondere verstanden werden, dass die Kopfstützeinheit lösbar mit dem Kindersitz verbunden ist, mit dem Fahrzeugsitz in einem integrierten Zustand eine Funktionseinheit bildet und nach einer Ablösung der Kopfstützeinheit die Kopfstützeinheit und der Fahrzeugsitz in einem funktionsfähigen Zustand sind. Es können insbesondere eine einfache Austauschbarkeit der Kopfstützeinheit und eine einfache Anpassung des Kindersitzes an unterschiedliche Insassen durch eine Austauschmöglichkeit der Kopfstützeinheit erreicht werden.

Ferner wird gemäß einer Weiterbildung der Erfindung vorgeschlagen, dass die Kopfstützeinheit wenigstens ein Befestigungsmittel aufweist, das zur Befestigung der Kopfstützeinheit in dem Fahrzeugsitz vorgesehen ist. Das Befestigungsmittel kann beispielsweise von einem Klettverschluss, einem Schraubenelement oder einer Gleitführung gebildet sein. Das Befestigungsmittel kann höhenverstellbar ausgeführt sein oder die Kopfstützeinheit an einer einzelnen, festgelegten Position im Fahrzeugsitz befestigen. Insbesondere ist das Befestigungsmittel dazu vorgesehen, die Kopfstützeinheit gegen eine senkrecht zu einer Rückenlehnenfläche des Fahrzeugsitzes wirkende Kraft, beispielsweise eine im Fall eines Crashs auftretende Beschleunigungskraft, zu befestigen. Es kann vorteilhaft eine sichere Befestigung der Kopfstützeinheit in dem Fahrzeugsitz erreicht werden.

Ferner wird gemäß einer Weiterbildung der Erfindung vorgeschlagen, dass an einem Aufnahmebereich zumindest ein Gurtführungselement angeordnet ist. Unter einem "Gurtführungselement" soll insbesondere ein Element verstanden werden, das dazu vorgesehen ist, den Sicherheitsgurt in einem vorgegebenen Verlauf zu führen und insbesondere ein Verdrehen des Sicherheitsgurts zu verhindern. Das Gurtführungselement kann beispielsweise als ein separates Element, wie beispielsweise ein verschließbares Ringelement, oder als eine besondere Ausformung eines den Aufnahmebereich begrenzenden Bereichs der Schulterpolstereinheit ausgebildet sein. Es kann insbesondere eine sichere Führung des Sicherheitsgurts auf der Schulterpolstereinheit mit einem hohen Sitzkomfort erreicht werden.

Ferner wird gemäß einer Weiterbildung der Erfindung vorgeschlagen, dass die Schulterpolstereinheit einen Verschlussmechanismus aufweist, der dazu vorgesehen ist, den Aufnahmebereich zu einer Einführung des Sicherheitsgurts quer zur Längserstreckung der Schulterpolstereinheit zerstörungsfrei zu öffnen. Unter "zerstörungsfrei öffnen" soll insbesondere ein Öffnen des Aufnahmebereichs verstanden werden, bei dem der Aufnahmebereich anschließend unter Verzicht auf externe Mittel erneut verschlossen werden kann. Der Verschlussmechanismus kann beispielsweise von einem Klettverschluss, einem Reißverschluss oder einem Druckknopf gebildet sein. Insbesondere ist der Verschlussmechanismus zu einer Öffnung durch einen Endnutzer vorgesehen. Der Verschlussmechanismus kann zu einer unmittelbaren, mechanischen Öffnung und/oder zu einer Öffnung durch ein Signal über eine Datenverbindung, welche beispielsweise per Kabel oder drahtlos mit einer elektronischen Einheit eines Fahrzeugs verbunden sein kann, vorgesehen sein. Es kann insbesondere eine einfache Befestigung des Sicherheitsgurts erreicht werden.

Erfindungsgemäß wird vorgeschlagen, dass die Schulterpolstereinheit zumindest ein Abstandselement aufweist, das dazu vorgesehen ist, Schulterpolsterelemente der Schulterpolstereinheit in einem vorgegebenen Abstand zueinander zu halten. Beispielsweise ist das Abstandselement von einem Band zwischen den Schulterpolsterelementen gebildet. Es kann insbesondere eine enge Anlange der Schulterpolsterelemente an einen Hals einer Person und ein hoher Sitzkomfort erreicht werden.

Ferner wird gemäß einer Weiterbildung der Erfindung vorgeschlagen, dass das Abstandselement einstellbar ausgebildet ist. Unter "einstellbar ausgebildet" soll insbesondere verstanden werden, dass das Abstandselement ein Mittel aufweist, mittels dem der vorgegebene Abstand eingestellt werden kann. Es kann insbesondere eine Anpassung der Fahrzeugsitzvorrichtung an eine sitzende Person erreicht werden.

Ferner wird gemäß einer Weiterbildung der Erfindung vorgeschlagen, dass das Abstandselement elastisch ausgebildet ist. Unter "elastisch ausgebildet" soll insbesondere verstanden werden, dass das Abstandselement aus einem Material hergestellt ist, das um zumindest ein Prozent, vorteilhaft um zumindest zwei Prozent und vorzugsweise um zumindest fünf Prozent einer Erstreckung elastisch ausdehnbar ist. Insbesondere ist das elastisch ausgebildete Abstandselement dazu vorgesehen, eine Variation des Abstands in einem kleinen Bereich zuzulassen. Es kann insbesondere ein hoher Sitzkomfort erreicht werden.

Die erfindungsgemäße Fahrzeugsitzvorrichtung ist insbesondere für einen Einsatz in Autos vorgesehen. Grundsätzlich kann die Fahrzeugsitzvorrichtung auch in anderen Fahrzeugen, beispielsweise in Zügen, Bussen und Flugzeugen, eingesetzt werden.

### Zeichnungen

Weitere Vorteile ergeben sich aus der folgenden Zeichnungsbeschreibung. In den Zeichnungen sind Ausführungsbeispiele der Erfindung dargestellt. Die Zeichnungen, die Beschreibung und die Ansprüche enthalten zahlreiche Merkmale in Kombination. Der Fachmann wird die Merkmale zweckmäßigerweise zu sinnvollen Kombinationen zusammenfassen.

Es zeigen:
- Fig. 1: eine schematische Darstellung einer erfindungsgemäße Fahrzeugsitzvorrichtung,
- Fig. 2: einen Fahrzeugsitz mit einer Fahrzeugsitzvorrichtung und
- Fig. 3: einen Fahrzeugsitz mit einer alternativen, nicht zur Erfindung gehörenden Fahrzeugsitzvorrichtung.

### Beschreibung der Ausführungsbeispiele:

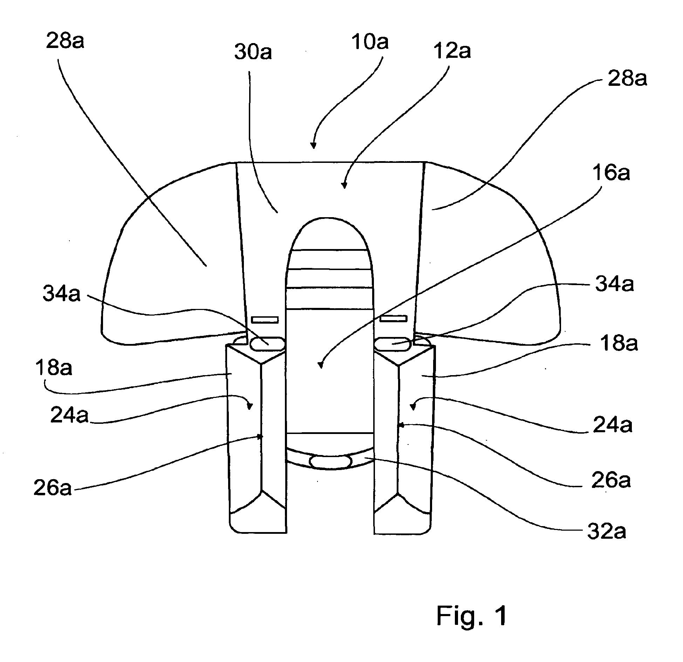

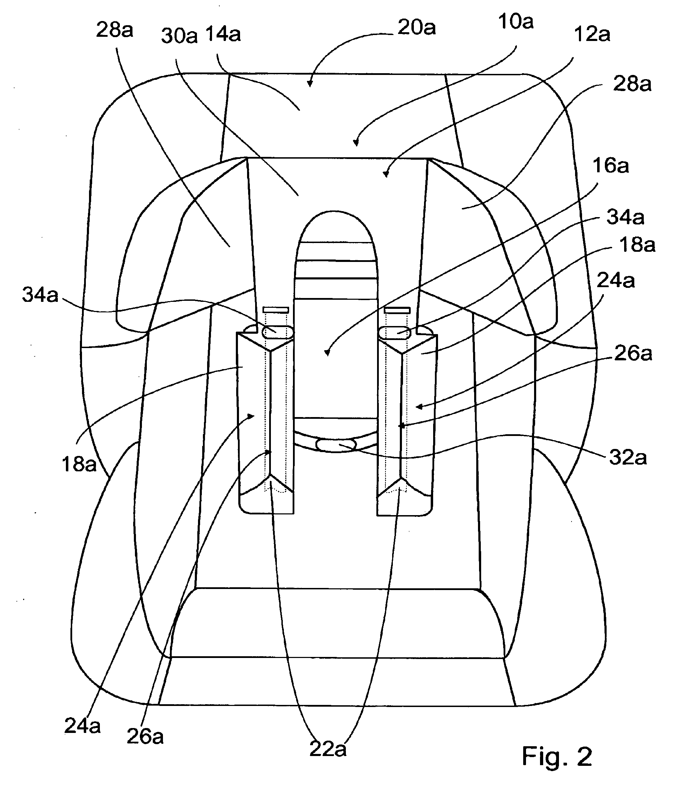

Fig. 1 zeigt eine von einer Kindersitzvorrichtung gebildete Fahrzeugsitzvorrichtung 10a. Die Fahrzeugsitzvorrichtung 10a umfasst eine Kopfstützeinheit 12a und eine Schulterpolstereinheit 16a. Die Fahrzeugsitzvorrichtung 10a ist dazu vorgesehen, in einen von einem Kindersitz gebildeten Fahrzeugsitz 20a eingesetzt zu werden (Fig. 2). Die Fahrzeugsitzvorrichtung 10a umfasst ferner eine Sitzbezugseinheit 14a. Die Sitzbezugseinheit 14a ist aus einem Textilgewebe hergestellt, über Oberflächen des Fahrzeugsitzes 20a gespannt und bildet eine abschließende Oberfläche des Fahrzeugsitzes 20a. Zu einer Erleichterung einer Reinigung des Fahrzeugsitzes 20a ist die Sitzbezugseinheit 14a abnehmbar ausgebildet.

Die Schulterpolstereinheit 16a ist unmittelbar mit der Kopfstützeinheit 12a verbunden. Die Schulterpolstereinheit 16a ist einstückig mit der Kopfstützeinheit 12a ausgeführt und ist mit dieser aus einem gemeinsamen Schaumstoffstück hergestellt. Die Schulterpolstereinheit 16a weist zwei Schulterpolsteretemente 18a auf, die jeweils dazu vorgesehen sind, an einer Schulter angeordnet zu werden. Die Schulterpolstereinheit 16a weist ein Abstandselement 32a auf, das dazu vorgesehen ist, die Schulterpolsterelemente 18a der Schulterpolstereinheit 16a in einem vorgegebenen Abstand zueinander zu halten. Das Abstandselement 32a ist elastisch ausgebildet und kann eine Länge um fünf Prozent elastisch ausdehnen. Das Abstandselement 32a ist als elastisches Band ausgebildet, so dass eine Variation des Abstands in einem kleinen Bereich möglich ist und ein Druck auf einen Hals vermieden werden kann. Das Abstandselement 32a ist verstellbar ausgebildet und weist hierzu eine Klickschnalle auf, mittels der ein Teilelement des Abstandselements 32a unbeweglich eingeklemmt werden kann. Durch ein Durchziehen durch die Klickschnalle kann eine Länge des Abstands zwischen den Schulterpolsterelementen 18a eingestellt und die Fahrzeugsitzvorrichtung 10a an eine sitzende Person angepasst werden. Die Kopfstützeinheit 12a weist zwei Seitenpolster 28a auf, die auf einander entgegengesetzten Seiten eines Rückenpolsters 30a angeordnet sind und zu einer Stützung eines Kopfs vorgesehen sind.

Die Kopfstützeinheit 12a der Fahrzeugsitzvorrichtung 10a ist dazu vorgesehen, lösbar in den Fahrzeugsitz 20a integriert zu werden. Die Kopfstützeinheit 12a weist ein nicht dargestelltes, auf einer Rückseite der Kopfstützeinheit 12a angeordnetes, von einer Gleitschiene gebildetes Befestigungsmittel auf, das zur Befestigung der Kopfstützeinheit 12a in dem Fahrzeugsitz 20a vorgesehen ist und hierzu mit einer auf der Sitzbezugseinheit 14a der Fahrzeugsitzvorrichtung 10a angebrachten Gleitführung zusammenwirkt. Durch das als Gleitschiene ausgebildete Befestigungsmittel wird die Kopfstützeinheit 12a höhenverstellbar in dem Fahrzeugsitz 20a befestigt. Alternativ kann auf ein Befestigungsmittel der Kopfstützeinheit 12a verzichtet werden und die Kopfstützeinheit 12a über die Schulterpolstereinheit 16a an einem Sicherheitsgurt 22a befestigt werden. Die Kopfstützeinheit 12a kann in diesem Fall beispielsweise durch ausziehbare Elemente als höhenanpassbar ausgebildet sein. Die Kopfstützeinheit 12a und die Schulterpolstereinheit 16a der Fahrzeugsitzvorrichtung 10a können somit von der Sitzbezugseinheit 14a bzw. dem Fahrzeugsitz 20a gelöst werden und beispielsweise ausgetauscht werden.

Die Schulterpolstereinheit 16a weist zwei in einer quer zu einer Längserstreckung der Schulterpolstereinheit 16a verlaufenden Ebene geschlossene Aufnahmebereiche 24a für den Sicherheitsgurt 22a auf, von denen jeweils ein Aufnahmebereich 24a auf jedem Schulterpolsterelement 18a angeordnet ist. Die Aufnahmebereiche 24a nehmen den Sicherheitsgurt 22a entlang einer Längserstreckung von fünf Zentimetern auf und umgeben den Sicherheitsgurt 22a um dreihundertsechzig Grad. Ein Aufnahmebereich 24a wird durch zwei eine Lasche bildende Ausformungen des Schulterpolsterelements 18a gebildet, wobei an einer Unterseite einer Ausformung und an einer Oberseite der anderen Ausformung jeweils Teile eines Klettverschlusses angeordnet sind. Der Klettverschluss bildet einen Verschlussmechanismus 26a, der dazu vorgesehen ist, den Aufnahmebereich 24a zu einer Einführung des Sicherheitsgurts 22a quer zur Längserstreckung der Schulterpolstereinheit 16a zerstörungsfrei zu öffnen. An einem Einführungsbereich, der von einem oberen Bereich des Aufnahmebereichs gebildet ist, weist jeder Aufnahmebereich 24a ein Gurtführungselement 34a auf, das als ein verschließbares Ringelement ausgebildet ist. Der Sicherheitsgurt 22a wird durch das Gurtführungselement 34a hindurchgeführt und anschließend verschlossen, wobei das Gurtführungselement 34a eng an dem Sicherheitsgurt 22a anliegt und ein Verdrehen des Sicherheitsgurts 22a verhindert. Der Fahrzeugsitz 20a weist ferner zwei Schlitze auf, durch die der Sicherheitsgurt 22a hindurchgeführt werden kann. Durch eine Aufnahme des Sicherheitsgurts 22a in den Aufnahmebereich 24a ist durch die Schulterpolstereinheit 16a eine in dem Fahrzeugsitz 20a sitzende Person komplett gegenüber dem Sicherheitsgurt 22a abgeschirmt. Der Sicherheitsgurt 22a ist somit frei von einer Berührung durch eine Haut der in dem Fahrzeugsitz 20a sitzenden Person.

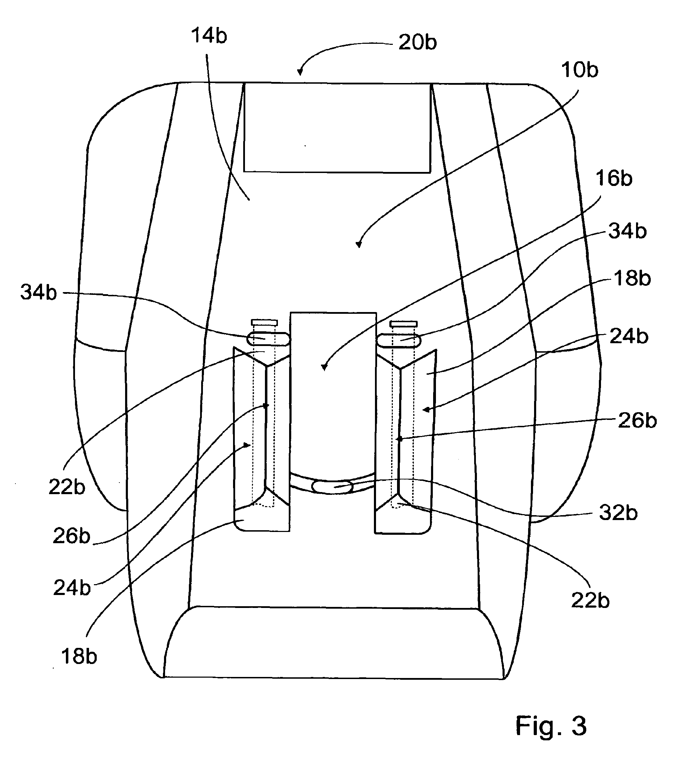

Fig. 3 zeigt ein weiteres, nicht zur Erfindung gehörendes Ausführungsbeispiel einer Fahrzeugsitzvorrichtung. Zu einer Unterscheidung der Ausführungsbeispiele ist der Buchstabe "a" in den Bezugszeichen des Ausführungsbeispiels in den Figuren 1 und 2 durch den Buchstaben "b" in den Bezugszeichen des Ausführungsbeispiels der Figur 3 ersetzt. Die Figurenbeschreibung der Fig. 3 beschränkt sich im Wesentlichen auf Unterschiede zu den Fig. 1 und 2. Bezüglich gleich bleibender Elemente wird auf die Figurenbeschreibung zu den Fig. 1 und 2 verwiesen.

In dieser alternativen, nicht zur Erfindung gehörenden Ausgestaltung umfasst eine Fahrzeugsitzvorrichtung 10b eine unmittelbar mit einer Sitzbezugseinheit 14b eines Fahrzeugsitzes 20b verbundene Schulterpolstereinheit 16b. Die Fahrzeugsitzvorrichtung 10b umfasst ebenfalls als Laschen ausgebildete Ausformungen der Schulterpolstereinheit 16b, die einen Aufnahmebereich 24b für einen Sicherheitsgurt 22b ausbilden. An einem Einführungsbereich des Aufnahmebereichs 24b ist ein Gurtführungselement 34b angeordnet. Ein einstellbares elastisches Abstandselement 32b ist zu einer Einstellung eines Abstands von Schulterpolsterelementen 18b untereinander vorgesehen.

### Bezugszeichen

- 10a: Fahrzeugsitzvorrichtung
- 10b: Fahrzeugsitzvorrichtung
- 12a: Kopfstützeinheit
- 14a: Sitzbezugseinheit
- 14b: Sitzbezugseinheit
- 16a: Schulterpolstereinheit
- 16b: Schulterpolstereinheit
- 18a: Schulterpolsterelement
- 18b: Schulterpolsterelement
- 20a: Fahrzeugsitz
- 20b: Fahrzeugsitz
- 22a: Sicherheitsgurt
- 22b: Sicherheitsgurt
- 24a: Aufnahmebereich
- 24b: Aufnahmebereich
- 26a: Verschlussmechanismus
- 26b: Verschlussmechanismus
- 28a: Seitenpolster
- 30a: Rückenpolster
- 32a: Abstandselement
- 32b: Abstandselement
- 34a: Gurtführungselement
- 34b: Gurtführungselement

## Patentansprüche

1. Fahrzeugsitzvorrichtung, insbesondere Kindersitzvorrichtung, mit zumindest einer Kopfstützeinheit (12a) und/oder zumindest einer Sitzbezugseinheit (14a) sowie mit zumindest einer Schulterpolstereinheit (16a), wobei die Schulterpolstereinheit (16a) unmittelbar mit der Kopfstützeinheit (12a) verbunden ist und die Schulterpolstereinheit (16a) dazu vorgesehen ist, in einem Schulterbereich eine Abstützung gegenüber einem Sicherheitsgurt (22a) zu ermöglichen, wobei die Schulterpolstereinheit (16a) einen Aufnahmebereich (24a) für den Sicherheitsgurt (22a) aufweist, **dadurch gekennzeichnet, dass** die Schulterpolstereinheit (16a) einstückig mit der Kopfstützeinheit (12a) aus einem gemeinsamen Materialstück ausgeführt ist und dass der Aufnahmebereich (24a) ein, in zumindest einer quer zu einer Längserstreckung der Schulterpolstereinheit (16a) verlaufenden Ebene geschlossener Aufnahmebereich (24a) ist, der den Sicherheitsgurt (22a) entlang einer Längserstreckung von zumindest einem Zentimeter aufnimmt, wobei die Schulterpolstereinheit (16a) zumindest ein Abstandselement (32a) aufweist, das dazu vorgesehen ist, Schulterpolsterelemente (18a) der Schulterpolstereinheit (16a) in einem vorgegebenen Abstand zueinander zu halten und wobei die Schulterpolstereinheit (16a) dazu vorgesehen ist, die Abstützung gegenüber dem Sicherheitsgurt (22a) so zu ermöglichen, dass dieser nicht auf Haut und/oder Kleidung aufliegt und ins Fleisch schneidet.

2. Fahrzeugsitzvorrichtung nach Anspruch 1,
**dadurch gekennzeichnet, dass**
die Kopfstützeinheit (12a) dazu vorgesehen ist, lösbar in einen Fahrzeugsitz (20a) integriert zu werden.

3. Fahrzeugsitzvorrichtung nach einem der vorhergehenden Ansprüche,
**dadurch gekennzeichnet, dass**
die Kopfstützeinheit (12a) wenigstens ein Befestigungsmittel aufweist, das zur Befestigung der Kopfstützeinheit (12a) in einem Fahrzeugsitz (20a) vorgesehen ist.

4. Fahrzeugsitzvorrichtung nach einem der vorhergehenden Ansprüche,
**dadurch gekennzeichnet, dass**
an einem Aufnahmebereich (24a) zumindest ein Gurtführungselement (34a ) angeordnet ist.

5. Fahrzeugsitzvorrichtung nach einem der vorhergehenden Ansprüche,
**dadurch gekennzeichnet, dass**
die Schulterpolstereinheit (16a) einen Verschlussmechanismus (26a) aufweist, der dazu vorgesehen ist, den Aufnahmebereich (24a) zu einer Einführung des Sicherheitsgurts (22a) quer zur Längserstreckung der Schulterpolstereinheit (16a) zerstörungsfrei zu öffnen.

6. Fahrzeugsitzvorrichtung nach Anspruch 1,
**dadurch gekennzeichnet, dass**
das Abstandselement (32a) einstellbar ausgebildet ist.

7. Fahrzeugsitzvorrichtung nach Anspruch 1 oder 6,
**dadurch gekennzeichnet, dass**
das Abstandselement (32a) elastisch ausgebildet ist.

8. Fahrzeugsitz, insbesondere Kindersitz, mit einer Fahrzeugsitzvorrichtung (10a) nach einem der vorhergehenden Ansprüche.

## Claims

1. Vehicle seat device, in particular child seat device, with at least one headrest unit (12a) and/or at least one seat cover unit (14a) as well as with at least one shoulder cushion unit (16a), wherein the shoulder cushion unit (16a) is directly connected with the headrest unit (12a) and the shoulder cushion unit (16a) is provided to allow, in a shoulder region, a bracing against a safety belt (22a), wherein the shoulder cushion unit (16a) comprises a receiving region (24a) for the safety belt (22a), **characterized in that** the shoulder cushion unit (16a) is implemented in one piece with the headrest unit (12a) from a shared material piece, and that the receiving region (24a) is a receiving region (24a) closed in at least one plane extending transversely with respect to a longitudinal extension of the shoulder cushion unit (16a), which receives the safety belt (22a) along a longitudinal extension of at least one centimetre, wherein the shoulder cushion unit (16a) comprises at least one spacer element (32a) that is provided to keep shoulder cushion elements (18a) of the shoulder cushion unit (16a) in a predetermined distance from each other, and wherein the shoulder cushion unit (16a) is provided to allow the bracing against the safety belt (22a) in such a way that it does not rest upon skin and/or clothing and does not cut into the flesh.

2. Vehicle seat device according to claim 1,
**characterized in that**
the headrest unit (12a) is provided to be releasably integrated into a vehicle seat (20a).

3. Vehicle seat device according to one of the preceding claims,
**characterized in that**
the headrest unit (12a) comprises at least one fastening element which is provided for fastening the headrest unit (12a) in a vehicle seat (20a).

4. Vehicle seat device according to one of the preceding claims,
**characterized in that**
at least one belt guiding element (34a) is arranged at a receiving region (24a).

5. Vehicle seat device according to one of the preceding claims,
**characterized in that**
the shoulder cushion unit (16a) comprises a closure mechanism (26a), which is provided to non-destructively open the receiving region (24a) transversely to the longitudinal extension of the shoulder cushion unit (16a), to the purpose of introducing the safety belt (22a).

6. Vehicle seat device according to claim 1,
**characterized in that**
the spacer element (32a) is implemented adjustable.

7. Vehicle seat device according to claim 1 or 6,
**characterized in that**
the spacer element (32a) is implemented elastic.

8. Vehicle seat, in particular child seat, with a vehicle seat device (10a) according to one of the preceding claims.

## Revendications

1. Dispositif de siège de véhicule, notamment dispositif de siège d'enfant, avec au moins une unité appui-tête (12a) et/ou avec au moins une unité de housse de siège (14a) aussi qu'avec au moins une unité de rembourrage d'épaule (16a), l' unité de rembourrage d'épaule (16a) étant jointe directement avec l'unité appui-tête (12a) et l'unité de rembourrage d'épaule (16a) étant prévue à rendre possible, dans une zone d'épaule un appuiement contre une ceinture de sécurité (22a), l'unité de rembourrage d'épaule (16a) présentant une zone recevante (24a) pour la ceinture de sécurité (22a), **caractérisé en ce que** l'unité de rembourrage d'épaule (16a) est implémentée dans une pièce avec l'unité appui-tête (12a) et d'une pièce de matériau commune et **en ce que** la zone recevante (24a) est une zone recevante (24a) qui est fermée dans au moins un plan s'étendant à travers d'une extension longitudinale de l'unité de rembourrage d'épaule (16a), laquelle zone recevante (24a) reçoit la ceinture de sécurité (22a) le long d'une extension longitudinale d'au moins un centimètre, l'unité de rembourrage d'épaule (16a) présentant au moins un élément d'espacement (32a) prévu à tenir des éléments de rembourrage d'épaule (18a) de l'unité de rembourrage d'épaule (16a) dans une distance prédéterminée l'un de l'autre et l'unité de rembourrage d'épaule (16a) étant prévue à rendre possible l'appuiement contre la ceinture de sécurité (22a) dans cette manière que laquelle ne reste pas sur la peau et/ou sur des vêtements ni coupe dans la chair.

2. Dispositif de siège de véhicule selon la revendication 1,
**caractérisé en ce que**
l'unité appui-tête (12a) et prévue à être intégrée amoviblement dans un siège de véhicule (20a).

3. Dispositif de siège de véhicule selon l'une quelconque des revendications précédentes,
**caractérisé en ce que**
l'unité appui-tête (12a) présente au moins un moyen de fixation, lequel est prévu à fixer l'unité appui-tête (12a) dans un siège de véhicule (20a).

4. Dispositif de siège de véhicule selon l'une quelconque des revendications précédentes,
**caractérisé en ce qu'**
au moins un élément de guidance de ceinture (34a) est disposé à une zone recevante (24a).

5. Dispositif de siège de véhicule selon l'une quelconque des revendications précédentes,
**caractérisé en ce que**
l'unité de rembourrage d'épaule (16a) présente un mécanisme de fermeture (26a), lequel est prévu à ouvrir la zone recevante (24a) dans une manière non-destructive, en travers de l'extension longitudinale de l'unité de rembourrage d'épaule (16a), pour introduire la ceinture de sécurité (22a).

6. Dispositif de siège de véhicule selon la revendication 1,
**caractérisé en ce que**
l'élément d'espacement (32a) est implémenté ajustable.

7. Dispositif de siège de véhicule selon la revendication 1 ou 6,
**caractérisé en ce que**
l'élément d'espacement (32a) est implémenté élastique.

8. Siège de véhicule, notamment siège d'enfant, avec un dispositif de siège de véhicule (10a) selon l'une quelconque des revendications précédentes.
